# EUROPEAN PATENT SPECIFICATION

(11) **EP 2 665 674 B1**
(45) Date of publication and mention of the grant of the patent: **07.03.2018**
(21) Application number: 12705703.2
(22) Date of filing: 17.01.2012
(51) Int. Cl.: B66C 23/16, F03D 13/10, F03D 80/50, B66C 23/20

(54) **MAINTENANCE CRANE AT ELEVATED AREAS**
WARTUNGSKRAN FÜR ERHÖHTE FLÄCHEN
GRUE D'ENTRETIEN POUR UNE UTILISATION AU NIVEAU DE ZONES EN HAUTEUR

(30) Priority: 17.01.2011 GB 201100654
(43) Date of publication of application: 27.11.2013
(73) Proprietor: Granada Material Handling Limited, Rochdale Lancashire OL11 2NU (GB)
(72) Inventor: BRADBURY, Mark, Rochdale Lancashire OL11 2NU (GB); GRIFFITHS, Howard, Rochdale Lancashire OL11 2NU (GB); SIDWELL, Mark, Rochdale Lancashire OL11 2NU (GB); WIGHT, David, Rochdale Lancashire OL11 2NU (GB)
(74) Representative: Appleyard Lees IP LLP
(86) International application number: PCT/GB2012/050089
(87) International publication number: WO 2012/098385

(56) References cited:
- EP-A1- 0 373 392
- GB-A- 2 105 679
- GB-A- 2 160 170
- US-A- 5 064 078
- US-A1- 2005 161 422

## Description

### Field of the Invention

The present invention relates to cranes.

### Background to the Invention

Cranes are often used to load and unload boats, for example at a dockside. Some specific problems arise when using a crane to load and unload a boat using a crane mounted on an offshore installation such as the lay-down area of an offshore wind generator. One such problem is facilitating safe and effective loading and unloading in the limited space available, and another is facilitating maintenance of the crane. Also, during early work on the offshore installation, when no mains electrical power is available it is difficult to use existing cranes for any loading and unloading tasks.

US 5 064 078 A describes a combination portable hoist, crane, and automobile towing mechanism adaptable into three configurations. As a portable hoist, a vertical mast and hydraulically actuatable boom are mounted on a standard support having support legs oriented in a "V", with the hoist boom positioned between the support legs. As a portable crane, the mast and boom are mounted onto a platform on a modified truck bumper in a manner to pivot 360 degrees about the axis of the vertical mast. The portable crane can therefore load and remove objects to/from the truck bed. As an automobile towing mechanism, the mast and boom are locked in position within the plane of movement of the boom normal to the vehicle rear bumper. A typical automobile bumper and axle attachment towing device is attached to the boom chain. Stabilizer bars orient the bumper and axle attachment towing device parallel to and spaced from the vehicle bumper, so that the tow vehicle may elevate one end of a towed vehicle for towing in a conventional manner.

EP 0 373 392 A1 describes a crane having a generally trapezoidal frame with a caster wheel at each corner. A mast is mounted on the front of the frame with a brace between each rear corner and top of the mast. Spring loaded pins are used for these connections. A lifting ram is pivotally connected to the mast and to a telescopic boom pivoted on the mast. The frame has a socket on each side and telescopic leg including inner and outer tubes is mounted in each socket. A spring loaded pin fixes the tubes relative to each other. The end of each leg has a wheel. Each leg can pivot relative to its sleeve to enable raising the leg to position the distal end near the mast. The legs can be disconnected from the sleeves and a locking device prevents removal of the legs.

GB 2 105 679 A describes a triangular link member pivotally connected to the post at one of its corners and pivotally connected to a jib at another of its corners. A ram is pivotally
connected between the post and the jib to cause the jib to be moved angularly, in use. At the third corner of the link member a removable lock pin can be fitted so that the link member moves with the jib as the jib is retracted by the ram to its lowermost operating position, as shown. Thereafter removal of the pin from the third corner allows the jib to be pivotted relative to the link member so that it assumes a parking position substantially parallel to the post. The pin can then be passed through aligned holes in the link member and jib to lock the jib to the link member.

GB 2 160 170 A describes a folding davit having a rotatable upright column to the top of which is pivoted a manually length-adjustable jib arm pivotal about a horizontal axis. There is manually length-adjustable control strut pivotally connected to both the upright column and the jib arm and this control strut is stowable within the column with the jib arm being releasably fastened to the column in substantially parallel relationship thereto when the davit is not in use. The column can be rotatably supported through the intermediary of bearing means on a base plate capable of being fastened to a vehicle bed. Alternatively, the column is provided with a bottom spigot rotatably housed in a socket also secured to the vehicle bed, An electrically operated winch may be attached to the jib arm with pulleys at the ends of the jib arm. This winch may be powered from the van battery. Alternatively a self contained manually, or power, operated hoist may be connected to the free end of the jib arm.

Example embodiments of the present invention aim to address at least one problem associated with the prior art, whether identified herein or otherwise. The at least one problem is solved by a crane according to the independent claim 1.

### Summary of the Invention

In a first aspect there is provided a crane assembly for the lay-down area of an offshore installation, the crane assembly including a crane mounted on an lay-down area such that in an in-use configuration the crane is operable to raise and lower a load from its head at a position extending beyond the boundary of the lay-down area, the crane assembly further arrangeable in an access configuration in which the head of the crane is positioned above a raised area of the lay-down area.

Suitably, the crane is assembly is arranged such that the crane is operable to raise and lower a load from its head when arranged in the access configuration.

Suitably, the crane comprises a bowing mechanism operable such in the access configuration the head of the crane is lower than in the in-use configuration.

Suitably, the crane is mounted on the lay-down area at a mounting point. Suitably, the crane is mounted on the lay-down area to rotate between the in-use configuration and the access configuration. Suitably, the crane is mounted to rotate about a substantially vertical axis when moving between the in-use configuration and the access configuration. Suitably, the crane is mounted to rotate at the mount under manual actuation. Suitably, the mount comprises a slewing mechanism which does not require any external power source beyond provision of manual input in order to rotate the crane at the mount.

In one embodiment the head of the crane is offset from the mount the same distance in both the in-use configuration and the access configuration. In another embodiment the head of the crane moves away from the mount, preferably away from the mount axis when moving from the in-use configuration and the access configuration. Suitably, operating the bowing mechanism to lower the head of the crane moves the head of the crane away from the mount.

Suitably, the bowing mechanism comprises a bowing pivot located away from the head of the crane. Suitably, the bowing mechanism comprises a single bowing pivot. Suitably, the bowing mechanism provides a rotation of more than 25 degrees about the bowing pivot, preferably more than 50 degrees, more preferably up to or in the region of 75 degrees, Suitably, the bowing mechanism provides a rotation of less than 90 degrees about the bowing pivot. Suitably, the bowing pivot allows bowing of the crane by rotation about a substantially horizontal axis. Suitably, the bowing pivot is located at a lower end of the crane. Suitably, the bowing mechanism is operable to lock with the head of the crane in the in-use configuration and/or in the access configuration. Suitably, the bowing mechanism is operable to lock such that in the in-use configuration and/or in the access configuration the bowing mechanism is unpowered, or un-actuated. Suitably, the bowing mechanism comprises a locking pin, which when present locks the head of the crane in place. Suitably, the bowing pivot is located near the bowing pin. Suitably the bowing pin and bowing pivot are arranged to be accessible to a worker on the lay-down area. Suitably, the bowing pin and bowing pivot are load bearing elements when the crane is arranged in the in-use configuration. Suitably, the bowing pin and bowing pivot are arranged to transfer structural load from the crane head to the mount when the crane is arranged in the in-use configuration. Suitably, in use thereof the bowing mechanism is actuated by a bowing actuator system. Suitably, the bowing actuator system is operable to control lowering of the head of the crane under gravity when moving between the in-use and access configuration. Suitably, the bowing actuator system is operable to raise the head of the crane to move between the access and in use configuration. Suitably, the bowing actuator system is a manually operable system. Suitably operation of the bowing actuator system does not require any external power source beyond provision of manual input. Suitably, the bowing actuator system comprises a single actuator. Suitably, the bowing actuator system is a hydraulic system. Suitably, the bowing actuator system comprises a single actuator, in the form of a hydraulic ram. Suitably, the bowing actuator mechanism comprises attachment points for a removable actuator. Suitably, the attachment points comprise one or more attachment pivot points or one or more abutment surfaces arranged to transfer load between the crane head and the removable actuator. Suitably, the removable actuator plays no role in supporting the head of the crane when the crane is arranged in the in-use configuration. Suitably, the removable actuator is removable when the crane is arranged in the in-use configuration. Suitably, in the in-use configuration the bowing mechanism is not supported by an actuator.

Suitably, the bowing mechanism is operable to lower the head of the crane by less than 80% of the height of the crane above the lay-down area, preferably less than 70%, more preferably less than 60% of the height of the crane above the lay-down area. Suitably, the bowing mechanism is operable to lower the head of the crane by greater than 20% of the height of the crane above the lay-down area, preferably greater than 30%, more preferably greater than 40% of the height of the crane above the lay-down area. Suitably, the bowing mechanism is operable to lower the head of the crane by 40% to 60% of the height of the crane above the lay-down area, preferably in the region of 50% of the height of the crane above the lay-down area.

Suitably, the crane is mounted on the lay-down area at or near the boundary thereof, such that in the in-use configuration movement relative to the mount extends the head over the boundary of the lay-down area to allow lowering and raising of a load from the head of the crane beyond the boundary. Suitably, the crane is mounted on the lay-down area such that movement relative to the mount from the in-use configuration to the access configuration extends the head over the lay-down area to an intermediate position which allows lowering and raising of a load form the head of the crane onto the lay-down area.

Suitably, the crane is mounted on the lay-down area at a position nearer to the boundary of the lay-down area than to the raised area of the lay-down area. Suitably, the crane is mounted on the lay-down area such that movement from the in-use configuration to the access configuration involves rotation about the mount and actuation of the bowing mechanism.

Suitably, the raised area of the lay-down area lies lower than the head of the crane by less than 80% of the height of the crane above the lay-down area, preferably less than 70%, more preferably less than 60% of the height of the crane above the lay-down area. Suitably, the raised area of the lay-down area lies greater than 20% of the height of the crane above the lay-down area, preferably greater than 30%, more preferably greater than 40% of the height of the crane above the lay-down area. Suitably, the raised area of the lay-down area lies between 40% to 60% of the height of the crane above the lay-down area, preferably in the region of 50% of the height of the crane above the lay-down area.. Suitably, the bowing mechanism is operable to lower the head of the crane to within arms reach above the lay-down area. Suitably, the bowing mechanism is operable to lower the head of the crane to 2m or below, whereas in use the crane head is located at 3m or above, preferably around 4m.

Suitably, the bowing mechanism is operable to raise the head of the crane from the access configuration to the in-use configuration. Suitably, the safe working load of the crane in the in-use configuration is more than the lifting capacity of the bowing mechanism, preferably more than 1.5 times the lifting capacity of the bowing mechanism, more preferably double the lifting capacity of the bowing mechanism.

Suitably, the raised area of the lay-down area lies adjacent to an installation structure. Suitably, the installation structure comprises a doorway, hatch or other opening accessible from the raised area of the lay-down area. Suitably, in the access configuration the head of the crane is accessible to a worker standing on the raised area of the lay-down area. Suitably, in the access configuration the crane is operable to raise a load onto the raised area for direct transfer into the installation structure, preferably through the doorway, hatch or other opening.

In another aspect there is provided a crane comprising a bowing mechanism, the bowing mechanism operable to allow the crane head to bow from an in-use configuration to an access configuration.

In another aspect there is provided crane comprising a bowing mechanism, the bowing mechanism operable to allow the crane head to bow from an in-use configuration to an access configuration, wherein the access configuration comprises a configuration in which the crane head is lowered for maintenance access and in which the head of the crane is lower than in the in-use configuration, the a bowing mechanism comprising a locking pin which when present locks the head of the crane in place in the in-use configuration and/or in the access configuration.

Suitably, the access configuration comprises a configuration in which the crane head is lowered for maintenance access, in which the head of the crane is lower than in the in-use configuration.

Suitably, the crane is comprises a base for mounting on the lay-down area at a mounting point. Suitably, the base comprises a mount arranged to allow the crane to rotate. Suitably, the mount is arranged to allow the crane to rotate about a substantially vertical axis. Suitably, the crane is mounted to rotate at the mount under manual actuation. Suitably, the mount comprises a slewing mechanism which does not require any external power source beyond provision of manual input in order to rotate the crane at the mount.

Suitably, the head of the crane is arranged to move away from the mount, preferably away from the vertical axis of the mount when moving from the in-use configuration and the access configuration. Suitably, operating the bowing mechanism to lower the head of the crane moves the head of the crane away from the mount.

Suitably, the bowing mechanism comprises a bowing pivot located away from the head of the crane. Suitably, the bowing mechanism comprises a single bowing pivot. Suitably, the bowing pivot allows bowing of the crane by rotation about a substantially horizontal axis. Suitably, the bowing pivot is located toward the base of the crane. Suitably, the bowing mechanism provides a rotation of more than 25 degrees about the bowing pivot, preferably more than 50 degrees, more preferably up to or in the region of 75 degrees, Suitably, the bowing mechanism provides a rotation of less than 90 degrees about the bowing pivot. Suitably, the bowing mechanism is operable to lock with the head of the crane in the in-use configuration and/or in the access configuration. Suitably, the bowing mechanism is operable to lock such that in the in-use configuration and/or in the access configuration the bowing mechanism is unpowered, or un-actuated. Suitably, the bowing mechanism comprises a locking pin, which when present locks the head of the crane in place. Suitably, the bowing pivot is located near the bowing pin. Suitably the bowing pin and bowing pivot are arranged to be accessible to a worker standing next to the base of the crane. Suitably, the bowing pin and bowing pivot are load bearing elements when the crane is arranged in the in-use configuration. Suitably, the bowing pin and bowing pivot are arranged to transfer structural load from the crane head to the mount when the crane is arranged in the in-use configuration. Suitably, in use thereof the bowing mechanism is actuated by a bowing actuator system. Suitably, the bowing actuator system is operable to control lowering of the head of the crane under gravity when moving between the in-use and access configuration. Suitably, the bowing actuator system is operable to raise the head of the crane to move between the access and in use configuration. Suitably, the bowing actuator system is a manually operable system. Suitably operation of the bowing actuator system does not require any external power source beyond provision of manual input. Suitably, the bowing actuator system comprises a single actuator. Suitably, the bowing actuator system is a hydraulic system. Suitably, the bowing actuator system comprises a single actuator, in the form of a hydraulic ram. Suitably, the bowing actuator mechanism comprises attachment points for a removable actuator. Suitably, the attachment points comprise one or more attachment pivot points or one or more abutment surfaces arranged to transfer load between the crane head and the removable actuator. Suitably, the removable actuator plays no role in supporting the head of the crane when the crane is arranged in the in-use configuration. Suitably, the removable actuator is removable when the crane is arranged in the in-use configuration. Suitably, in the in-use configuration the bowing mechanism is not supported by an actuator.

Suitably, the bowing mechanism is operable to lower the head of the crane by less than 80% of the height of the crane above the base, preferably less than 70%, more preferably less than 60% of the height of the crane above the base. Suitably, the bowing mechanism is operable to lower the head of the crane by greater than 20% of the height of the crane above the base, preferably greater than 30%, more preferably greater than 40% of the height of the crane above the base. Suitably, the bowing mechanism is operable to lower the head of the crane by 40% to 60% of the height of the crane above the base, preferably in the region of 50% of the height of the crane above the base. Suitably, the bowing mechanism is operable to lower the head of the crane to within arms reach above the base. Suitably, the bowing mechanism is operable to lower the head of the crane to 2m or below, whereas in use the crane head is located at 3m or above, preferably around 4m.

Suitably, the bowing mechanism is operable to raise the head of the crane from the access configuration to the in-use configuration. Suitably, the safe working load of the crane in the in-use configuration is more than the lifting capacity of the bowing mechanism, preferably more than 1.5 times the lifting capacity of the bowing mechanism, more preferably double the lifting capacity of the bowing mechanism.

### Brief Introduction to the Drawings

For a better understanding of the invention, and to show how embodiments of the same may be carried into effect, reference will now be made, by way of example, to the accompanying diagrammatic drawings in which:
Figure 1 shows a crane assembly including a crane arranged in an in-use configuration;
Figure 2 shows the crane assembly of Figure 1 with the crane arranged in an access configuration;
Figures 3A-3G show the bowing assembly of the crane of Figure 1 and explain the use thereof;
Figure 4 shows the crane assembly of Figure 1 with the crane arranged in an alternative access configuration; and
Figure 5 shows the crane assembly of Figure 1 with the crane arranged in a further alternative access configuration.

### Description of Example Embodiments

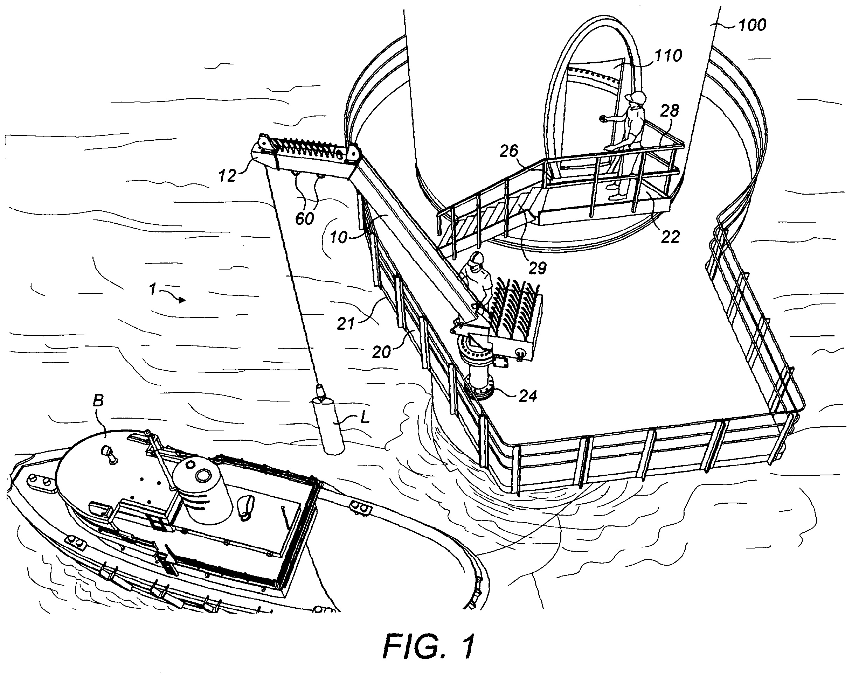

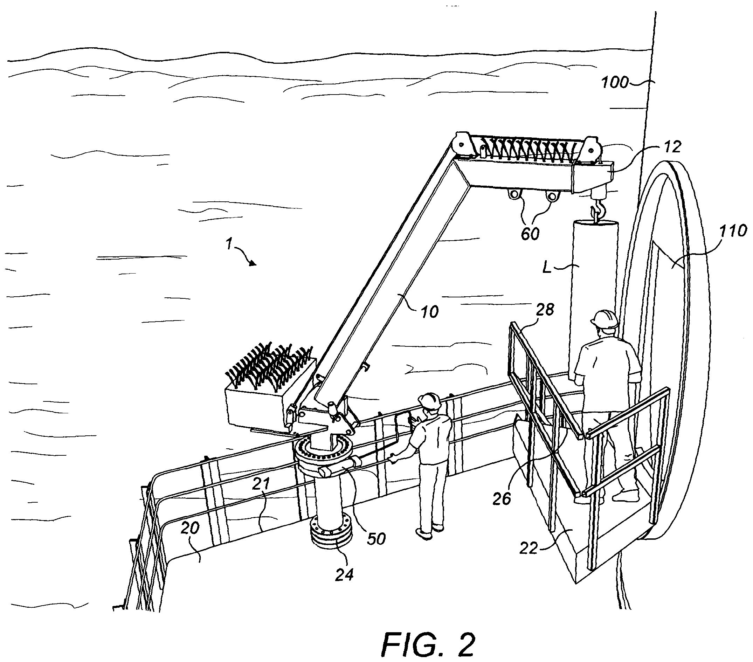

Figures 1 and 2 each show a crane assembly on the lay-down area of an offshore installation. The installation is in the form of a wind generator supported on a tower structure 100. The crane assembly 1 includes a crane 10 mounted on an lay-down area 20, such that in an in-use configuration as shown in Figure 1 the crane 10 is operable to raise and lower a load L from its head 12 at a position beyond the boundary 21 of the lay-down area 20. Figure 1 shows a load L being raised from a boat B. Figure 2 shows the crane assembly 1 arranged in an access configuration in which the head 12 of the crane is positioned above a raised area 22 of the lay-down area 20.

The crane 10 is mounted on the lay-down area 20 at a mount 24, and rotates about a substantially vertical axis between the in-use configuration and the access configuration. A manually powered slewing mechanism 50 facilitates this rotation.

The head 12 of the crane 10 is horizontally offset from the mount 24 the same distance in both the in-use configuration and the access configuration of Figures 1 and 2. The mount 24 is positioned on the lay-down area 20 at a position nearer to the boundary 21 of the lay-down area 20 than to the raised area 22 of the lay-down area 20.

The raised area 22 of the lay-down area 20 lies adjacent to the tower structure 100. The tower structure 100 comprises a doorway 110 accessible from the raised area 22 of the lay-down area 20. The raised area 22 of the lay-down area is provided to allow workers to access the tower structure 100 for installation and maintenance of equipment associated with the installation, for example the electrical generating equipment. The raised area 22 of the lay-down area 20 and the associated doorway 110 of the tower structure 110 are positioned above the lay-down area 20 to guard against ingress of sea water through the doorway 110 in stormy conditions when the lay-down area 20 may be subject to inundation. Whereas earlier crane assemblies have been arranged to deliver a load onto an lay-down area, the present assembly is arranged so that in the access configuration shown in Figure 2 the crane is operable to provide a load L directly onto the raised area 22 for convenient transfer through the doorway 110, eliminating the need for workers operating the crane assembly 1 to carry loads up and down from the raised area 22 of the lay-down area 20 when delivering loads to the doorway 110.

Example embodiments of the present invention are arranged such that in the access configuration the head 12 of the crane 10 is accessible to a worker standing on the raised area 22 of the lay-down area 20. This is advantageous, as it means that workers can safely access the head of the crane 10 for maintenance purposes, without the need for ladders, ropes or other climbing equipment. Some embodiments enable access for these purposes through selecting an appropriate height of the head 12 of the crane 10 relative to the height of the raised area 22 of the lay-down area 20. However, closely matching these heights for most convenient ease of access may not give sufficient clearance for some loads to be delivered to the raised area 22.

One solution to this problem is to align the mount 24 in position so that the head 12 of the crane 10 moves over an edge portion 26 of the raised area 22 of the lay-down area 20 at a position where no guard rail 28 is present around the raised area 22 of the lay-down area 20. In example embodiments as shown in Figures 1 and 2 the head 12 of the crane 10 moves above the raised area by moving from an area above an access stair 29 provided to enable access to the raised area 22 of the lay-down area 20. Another solution that can be used either alongside or as an alternative to the first it to provide the crane with a bowing mechanism.

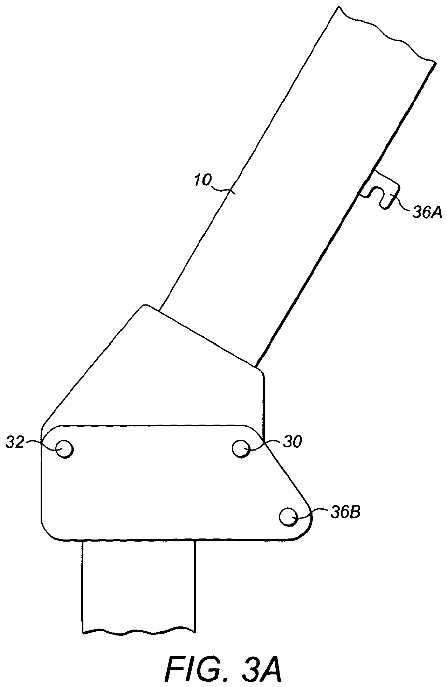

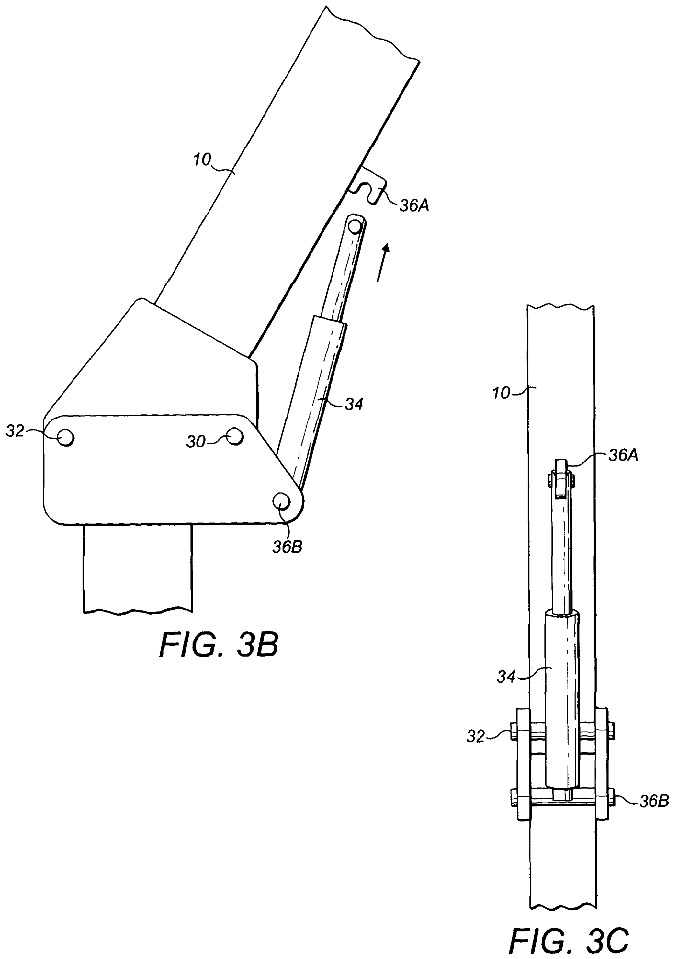

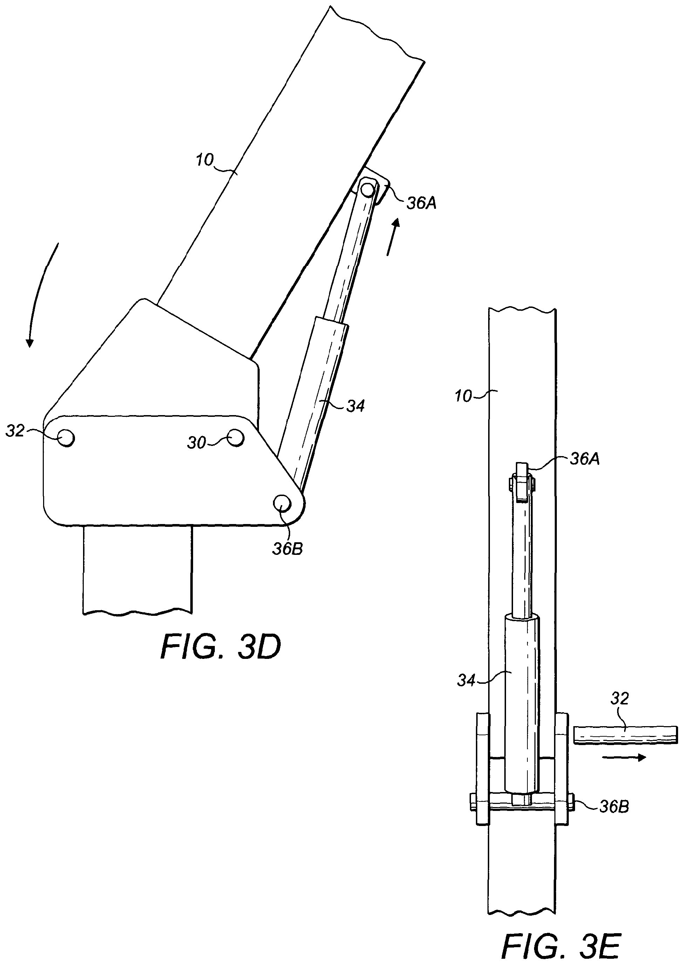

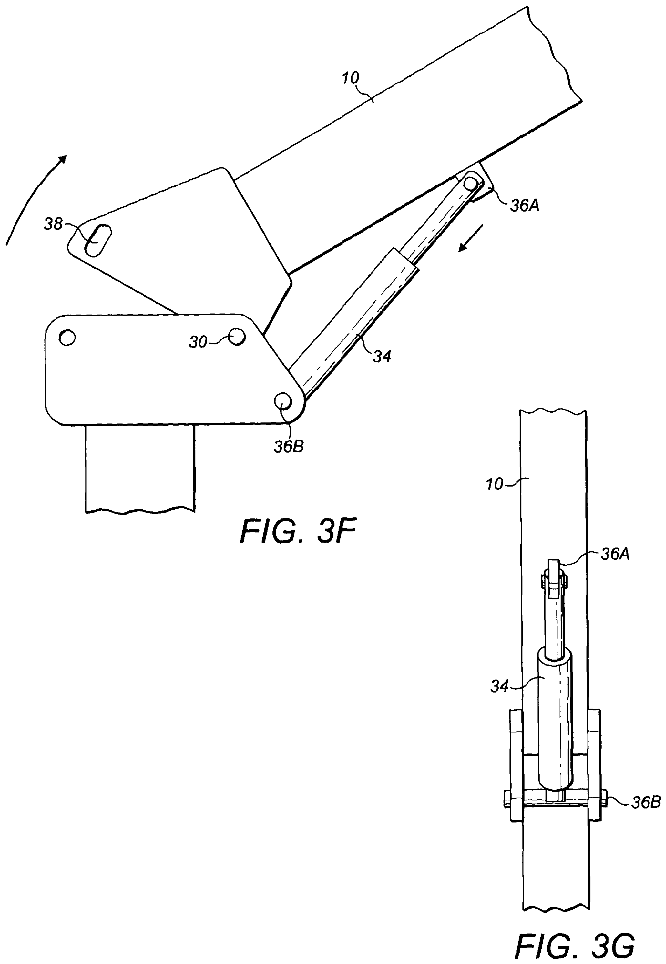

Figures 3 to 5 explain the bowing mechanism of the crane shown in Figures 1 and 2. The crane 10 comprises a bowing mechanism operable such in the access configuration the head of the crane 12 is lower than the head of the crane 12 when the crane is positioned in the in-use configuration. In the embodiment of Figures 1 and 2 movement from the in-use configuration to the access configuration involves rotation about the mount 24 and actuation of the bowing mechanism, though in other embodiments of the crane the bowing mechanism alone may be provided.

The bowing mechanism comprises a bowing pivot 30 located away from the head of the crane 10. The bowing pivot 10 is mounted to allow bowing of the crane 10 by rotation about a substantially horizontal axis. The bowing pivot is located at a lower end of the crane 10.

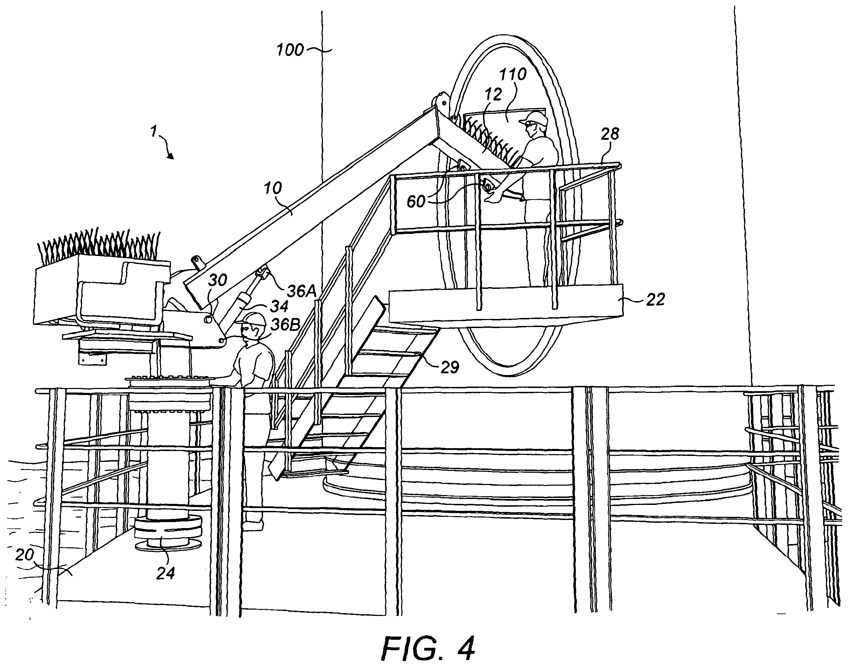

In the in-use configuration, the bowing mechanism locks without the need for actuation. A locking pin 32 when present locks the head 12 of the crane 10 in place in the in-use configuration. As can be seen from Figure 4 the bowing pin 32 and bowing pivot 30 are arranged to be accessible to a worker on the lay-down area 20. The bowing pin 32 and bowing pivot 30 are each load bearing elements when the crane 10 is arranged in the in-use configuration and are arranged to transfer structural load from the crane head 12 to the mount 24. Figure 3A shows the bowing pivot 30 and locking pin 32 in place when the crane 10 is in the in-use configuration. To move the crane to the access configuration using the bowing mechanism the operations shown in Figures 3B to 3G are performed.

A bowing actuator in the form of a hydraulic ram 34 is positioned between attachment points 36A, 36B. The bowing actuator is suitably operable in response to a manual hydraulic pumping input, so that no external electrical or other power source is needed to operate the ram 34. The attachment point 36A is an abutment surface and the attachment point 36B is a pivot point. Extending the hydraulic ram 34 from a contracted position allows it to match and fit with the attachment points 36A, 36B, as indicated by the arrow in Figure 3B. Once engaged with the attachment points 36A, 36B the bowing actuator system is operable to raise the head 12 of the crane 10 slightly, by further extending the hydraulic ram 34, as indicated by the upward arrow in Figure 3D. This pushes the head 12 of the crane to rotate about the bowing pivot 30, as indicated by the downward arrow in Figure 3D. From the configuration of Figure 3D the bowing pin 32 is then removable, as shown by the arrow in Figure 3E. In this configuration the bowing pivot 30 and hydraulic ram 34 are load bearing, and the hydraulic ram is operable to control lowering of the head 12 of the crane 10 under gravity to move between the in-use and access configuration, as indicated by the arrows in Figure 3F. Figure 3F also shows the slotted fitting 38 toward the lower part of the crane 10 through which the pivot pin 32 passes when in use supporting the head 12 of the crane 10 in the in-use configuration. Figure 3G shows the crane in the access configuration. Reverse operation of the bowing actuator enables the crane 10 to resume the in-use configuration.

Since the actuator 34 plays no role in supporting the head 12 of the crane 10 when the crane 10 is arranged in the in-use configuration it is removable from the crane 10 when appropriate. For example, removal prevents environmental or accidental damage, and means that a worker using a single actuator can move from one crane assembly to the next taking the actuator along for use on each crane assembly, thereby eliminating the need for multiple actuators and subsequently reducing the manufacturing cost of the crane assemblies. Furthermore, the actuator 34 of the bowing mechanism is not involved in load bearing in the in-use configuration, and the bowing mechanism is suitable for lifting the crane head and not the full working load of the crane it is possible to design and build a cheaper and more efficient bowing mechanism than would be required for a multi-stage lifting crane. For example, the embodiments shown in the drawings represent a crane 10 with a safe working load of 650-1300kg. The bowing mechanism provides a lifting capacity of around 300kg, suitable for lifting the weight of the head 12.

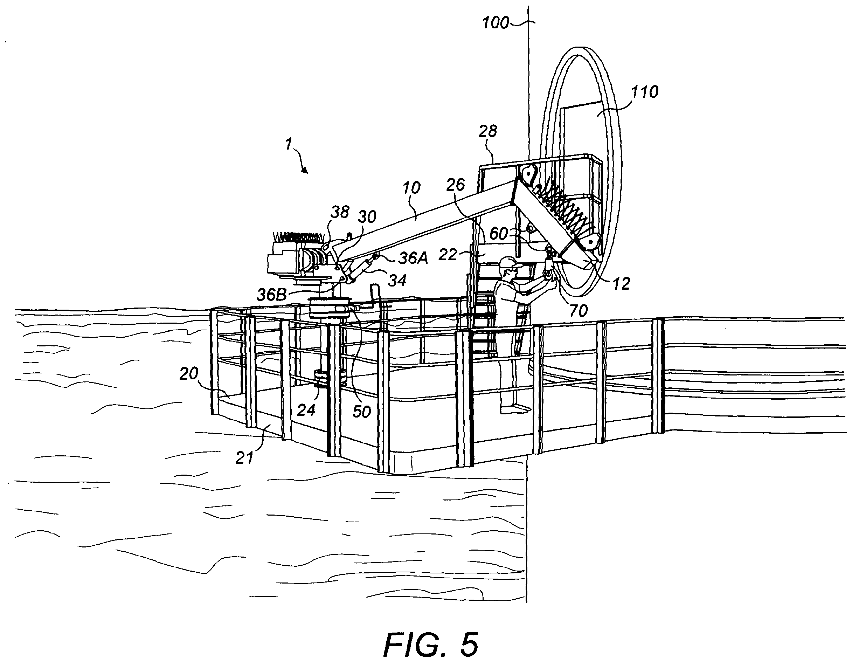

The bowing mechanism is operable to lower the head of the crane by only a proportion of the height of the crane, with the degree of lowering appropriate to the height difference between the head of the crane in the in-use configuration and the height of the raised area 22 of the lay-down area 20, or the lay-down area 20 itself. Operation of the bowing mechanism suitably enables the head 12 of the crane 10 to move away from the mount 24 when moving from the in-use configuration and the access configuration, but this is accommodated by either providing sufficient clearance between the head of the crane and the tower structure 100. For the embodiment of Figure 4 the radius swept by the head 12 from the mount 24 when the crane 10 is in the in-use configuration is 2645mm and in the access configuration 3600mm. In the embodiment shown in Figure 4, the head 12 of the crane 10 extends through the doorway 110 when in the access configuration. Figure 5 shows an example embodiment in which the head 12 of the crane 10 is lowered over the lay-down area 20 in the access configuration to be sufficiently low when in the access configuration to enable a worker to reach up and access loading points 60 or other features provided at or near the head 12. The access configuration of this embodiment is particularly useful in early work on offshore installations, where no mains electrical power is available. The manually operable slewing mechanism and bowing actuator combine to enable the head 12 to be brought into the reach of a worker standing on the lay-down area 20. This means that the worker can fix a secondary lifting device 70 to the head, e.g. at the loading points 60, for example a pulley wheel, a manual winch or a portable electric winch. With the crane 10 arranged thereafter into the in-use configuration the crane 10 can then be used in the early stage lifting jobs such as loading mains cables and other equipment onto the lay-down are 20. These advantages are achieved without the need for there to be any working at height.

A safety system may, if desired, be provided to prevent movement of the crane to the access configuration in rotational positions relative to the mount 24 where there is a risk of the crane 10 coming into contact with the tower structure 100.

All of the features disclosed in this specification (including any accompanying claims, abstract and drawings), and/or all of the steps of any method or process so disclosed, may be combined in any combination, except combinations where at least some of such features and/or steps are mutually exclusive, within the scope of the appended claims. Each feature disclosed in this specification (including any accompanying claims, abstract and drawings) may be replaced by alternative features serving the same, equivalent purpose, unless expressly stated otherwise. Thus, unless expressly stated otherwise, each feature disclosed is one example only of a generic series of equivalent features.

## Claims

1. A crane (10) comprising a bowing mechanism, the bowing mechanism operable to allow the crane head (12) to bow from an in-use configuration to an access configuration, wherein the access configuration comprises a configuration in which the crane head (12) is lowered for maintenance access and in which the head (12) of the crane (10) is lower than in the in-use configuration, the a bowing mechanism comprising a locking pin (32) which when present locks the head (12) of the crane (10) in place in the in-use configuration and/or in the access configuration, wherein the bowing mechanism is actuated by a bowing actuator system, the bowing actuator system operable to control lowering of the head (12) of the crane (10) under gravity when moving between the in-use and access configuration, **characterised in that** the bowing actuator mechanism comprises attachment points (36A, 36B) for a removable actuator (34) and the removable actuator (34) plays no role in supporting the head (12) of the crane (10) when the crane (10) is arranged in the in-use configuration.

2. The crane (10) of claim 1, comprising a base for mounting on a lay-down area at a mounting point.

3. The crane (10) of any one of claims 1 or 2, wherein head (12) of the crane (10) moves away from the base when moving from the in-use configuration and the access configuration.

4. The crane (10) of any preceding claim, wherein when the crane (10) is mounted at a mount (24), the crane (10) is arranged such that operating the bowing mechanism to lower the head (12) of the crane (10) moves the head (12) of the crane (10) away from the mount (24).

5. The crane (10) of any preceding claim, wherein the bowing mechanism comprises a bowing pivot (30) located at a lower end of the crane (10).

6. The crane (10) of any preceding claim, wherein the bowing mechanism is operable to lock such that in the in-use configuration and/or in the access configuration the bowing mechanism is unpowered, or un-actuated.

7. The crane (10) of any preceding claim, where the bowing mechanism comprises a bowing pin and bowing pivot (30) accessible to a worker on the lay-down area.

8. The crane (10) of claim 7, wherein the bowing pin and bowing pivot (30) are load bearing elements when the crane (10) is arranged in the in-use configuration.

9. The crane (10) of any preceding claim, wherein the bowing actuator system is a manually operable system which does not require any external power source beyond provision of manual input.

10. The crane (10) of any preceding claim, wherein the removable actuator (34) is removable when the crane (10) is arranged in the in-use configuration.

11. The crane (10) of any preceding claim, wherein in the in-use configuration the bowing mechanism is not supported by an actuator.

12. The crane (10) of any preceding claim, wherein the safe working load of the crane (10) in the in-use configuration is more than the lifting capacity of the bowing mechanism.

13. The crane (10) of claim 12, wherein the safe working load of the crane (10) in the in-use configuration is more than the 1.5 times the lifting capacity of the bowing mechanism.

## Patentansprüche

1. Kran (10), der einen Knickmechanismus umfasst, wobei der Knickmechanismus so betreibbar ist, dass er den Krankopf (12) aus einer Verwendungskonfiguration in eine Zugangskonfiguration knickt, wobei die Zugangskonfiguration eine Konfiguration umfasst, in welcher der Krankopf (12) für den Wartungszugang abgesenkt wird und in welcher der Kopf (12) des Krans (10) niedriger ist als in der Verwendungskonfiguration, wobei der Knickmechanismus einen Sicherungsbolzen (32) umfasst, der, wenn vorhanden, den Kopf (12) des Krans (10) ortsfest in der Verwendungskonfiguration und/oder in der Zugangskonfiguration arretiert, wobei der Knickmechanismus durch ein Knickstellantriebssystem betätigt wird, wobei das Knickstellantriebssystem so betreibbar ist, dass es das Absenken des Kopfes (12) des Krans (10) unter Schwerkraft steuert, wenn dieser sich zwischen der Verwendungs- und der Zugangskonfiguration bewegt, **dadurch gekennzeichnet, dass** der Knickstellantriebsmechanismus Anbringungspunkte (36A, 36B) für einen abnehmbaren Stellantrieb (34) umfasst und der abnehmbare Stellantrieb (34) beim Abstützen des Kopfes (12) des Krans (10) keine Rolle spielt, wenn der Kran (10) in der Verwendungskonfiguration angeordnet ist.

2. Kran (10) nach Anspruch 1, der eine Grundplatte für die Montage auf einem Abstellplatz an einer Montagestelle umfasst.

3. Kran (10) nach einem der Ansprüche 1 oder 2, wobei der Kopf (12) des Krans (10) sich von der Grundplatte weg bewegt, wenn er sich aus der Verwendungskonfiguration und der Zugangskonfiguration bewegt.

4. Kran (10) nach einem der vorhergehenden Ansprüche, wobei, wenn der Kran (10) auf einem Sockel (24) montiert ist, der Kran (10) so angeordnet ist, dass das Betätigen des Knickmechanismus zum Absenken des Kopfes (12) des Krans (10) den Kopf (12) des Krans (10) vom Sockel (24) weg bewegt.

5. Kran (10) nach einem der vorhergehenden Ansprüche, wobei der Knickmechanismus einen Knickpunkt (30) umfasst, der an einem unteren Ende des Krans (10) angeordnet ist.

6. Kran (10) nach einem der vorhergehenden Ansprüche, wobei der Knickmechanismus für das Arretieren so betreibbar ist, dass der Knickmechanismus in der Verwendungskonfiguration und/oder in der Zugangskonfiguration stromlos oder unangetrieben ist.

7. Kran (10) nach einem der vorhergehenden Ansprüche, wobei der Knickmechanismus einen Knickbolzen und ein Knickgelenk (30) umfasst, die für einen Arbeiter auf dem Abstellplatz zugänglich sind.

8. Kran (10) nach Anspruch 7, wobei der Knickbolzen und das Knickgelenk (30) lasttragende Elemente sind, wenn der Kran (10) in der Verwendungskonfiguration angeordnet ist.

9. Kran (10) nach einem der vorhergehenden Ansprüche, wobei das Knickstellantriebssystem ein manuell betreibbares System ist, das außer der Bereitstellung einer manuellen Eingabe keine weitere externe Kraftquelle erfordert.

10. Kran (10) nach einem der vorhergehenden Ansprüche, wobei der abnehmbare Stellantrieb (34) abnehmbar ist, wenn der Kran (10) in der Verwendungskonfiguration angeordnet ist.

11. Kran (10) nach einem der vorhergehenden Ansprüche, wobei in der Verwendungskonfiguration der Knickmechanismus nicht durch einen Stellantrieb unterstützt wird.

12. Kran (10) nach einem der vorhergehenden Ansprüche, wobei die zulässige Arbeitslast des Krans (10) in der Verwendungskonfiguration höher ist als das Hebevermögen des Knickmechanismus.

13. Kran (10) nach Anspruch 12, wobei die zulässige Arbeitslast des Krans (10) in der Verwendungskonfiguration mehr als 1,5 Mal so hoch ist wie das Hebevermögen des Knickmechanismus.

## Revendications

1. Grue (10) comprenant un mécanisme d'inclinaison, le mécanisme d'inclinaison étant apte à permettre l'inclinaison de la tête de la grue (12) d'une configuration d'utilisation dans une configuration d'accès, la configuration d'accès comprenant une configuration dans laquelle la tête de la grue (12) est abaissée pour permettre un accès en vue d'une maintenance et dans laquelle la tête (12) de la grue (10) est plus basse que dans la configuration d'utilisation, le mécanisme d'inclinaison comprenant une broche de verrouillage (32) qui, lorsqu'elle est présente, verrouille la tête (12) de la grue (10) en position dans la configuration d'utilisation et/ou dans la configuration d'accès, le mécanisme d'inclinaison étant actionné par un système d'actionneur d'inclinaison, le système d'actionneur d'inclinaison étant apte à commander l'abaissement de la tête (12) de la grue (10) sous l'effet de la gravité lors du déplacement entre la configuration d'utilisation et la configuration d'accès, **caractérisée en ce que** le mécanisme d'actionneur d'inclinaison comprend des points d'attache (36A, 36B) pour un actionneur amovible (34) et l'actionneur amovible (34) ne joue aucun rôle dans le support de la tête (12) de la grue (10) lorsque la grue (10) est disposée dans la configuration d'utilisation.

2. Grue (10) selon la revendication 1, comprenant une base pour monter une aire de dépôt au niveau d'un point de montage.

3. Grue (10) selon l'une quelconque des revendications 1 ou 2, dans laquelle la tête (12) de la grue (10) se déplace à l'écart de la base lors du déplacement depuis la configuration d'utilisation et la configuration d'accès.

4. Grue (10) selon l'une quelconque des revendications précédentes, dans laquelle, lorsque la grue (10) est montée au niveau d'une fixation (24), la grue (10) est disposée de telle sorte que le fonctionnement du mécanisme d'inclinaison pour abaisser la tête (12) de la grue (10) déplace la tête (12) de la grue (10) à l'écart de la fixation (24).

5. Grue (10) selon l'une quelconque des revendications précédentes, dans laquelle le mécanisme d'inclinaison comprend un pivot d'inclinaison (30) situé à une extrémité inférieure de la grue (10).

6. Grue (10) selon l'une quelconque des revendications précédentes, dans laquelle le mécanisme d'inclinaison peut fonctionner de manière à se verrouiller de telle sorte que dans la configuration d'utilisation et/ou dans la configuration d'accès, le mécanisme d'inclinaison ne soit pas alimenté ou ne soit pas actionné.

7. Grue (10) selon l'une quelconque des revendications précédentes, dans laquelle le mécanisme d'inclinaison comprend une broche d'inclinaison et un pivot d'inclinaison (30) accessibles à un opérateur sur l'aire de dépôt.

8. Grue (10) selon la revendication 7, dans laquelle la broche d'inclinaison et le pivot d'inclinaison (30) sont des éléments porteurs de charges lorsque la grue (10) est disposée dans la configuration d'utilisation.

9. Grue (10) selon l'une quelconque des revendications précédentes, dans laquelle le système d'actionneur d'inclinaison est un système à commande manuelle qui ne nécessite pas d'alimentation en puissance extérieure en plus de la fourniture d'une entrée manuelle.

10. Grue (10) selon l'une quelconque des revendications précédentes, dans laquelle l'actionneur amovible (34) peut être enlevé lorsque la grue (10) est disposée dans la configuration d'utilisation.

11. Grue (10) selon l'une quelconque des revendications précédentes, dans laquelle, dans la configuration d'utilisation, le mécanisme d'inclinaison n'est pas supporté par un actionneur.

12. Grue (10) selon l'une quelconque des revendications précédentes, dans laquelle la charge de travail admissible de sécurité de la grue (10) dans la configuration d'utilisation est supérieure à la capacité de levage du mécanisme d'inclinaison.

13. Grue (10) selon la revendication 12, dans laquelle la charge de travail admissible de sécurité de la grue (10) dans la configuration d'utilisation est supérieure à 1,5 fois la capacité de levage du mécanisme d'inclinaison.
